(19) **Europäisches Patentamt**

**European Patent Office**

**Office européen des brevets**

(11) **EP 1 592 248 B1**

(12) **EUROPEAN PATENT SPECIFICATION**

(45) Date of publication and mention
of the grant of the patent:
**20.09.2006 Bulletin 2006/38**

(51) Int Cl.:
*H04N 7/01* (2006.01)     *H04N 5/14* (2006.01)

(21) Application number: **04010299.8**

(22) Date of filing: **30.04.2004**

(54) **Motion vector estimation employing adaptive temporal prediction**

Bewegungsvektorschätzung durch adaptive zeitliche Vorhersage

Estimation de vecteur de mouvement utilisant prediction temporelle

(84) Designated Contracting States:
**DE FR GB**

(43) Date of publication of application:
**02.11.2005 Bulletin 2005/44**

(73) Proprietor: **MATSUSHITA ELECTRIC INDUSTRIAL
CO., LTD.**
**Kadoma-shi, Osaka 571-8501 (JP)**

(72) Inventors:
• **Hubrich, Ralf**
  **64331 Weiterstadt-Gräfenhausen (DE)**
• **Eckhardt, Michael**
  **65207 Wiesbaden (DE)**

(74) Representative: **Grünecker, Kinkeldey,
Stockmair & Schwanhäusser
Anwaltssozietät
Maximilianstrasse 58
80538 München (DE)**

(56) References cited:
**US-A1- 2002 131 499**

• **HAAN DE G ET AL: "TRUE-MOTION ESTIMATION
WITH 3-D RECURSIVE SEARCH BLOCK
MATCHING" IEEE TRANSACTIONS ON CIRCUITS
AND SYSTEMS FOR VIDEO TECHNOLOGY, IEEE
INC. NEW YORK, US, vol. 3, no. 5, 1 October 1993
(1993-10-01), pages 368-379, XP000414663 ISSN:
1051-8215**
• **KIM D-W ET AL: "Adaptive motion estimation
based on spatio-temporal correlation" SIGNAL
PROCESSING. IMAGE COMMUNICATION,
ELSEVIER SCIENCE PUBLISHERS,
AMSTERDAM, NL, vol. 13, no. 2, 1 August 1998
(1998-08-01), pages 161-170, XP004129635 ISSN:
0923-5965**
• **WILSON P: "KONVERTIERUNG VON
BILDFROMATEN BEIM DIGITALEN
FERNSEHEN" FERNSEH UND KINOTECHNIK,
VDE VERLAG GMBH. BERLIN, DE, vol. 54, no. 5,
April 2000 (2000-04), pages 198-200,202,
XP000963680 ISSN: 0015-0142**

**Description**

The present invention relates to an improved motion estimation. In particular, the present invention relates to a method for estimation of a motion vector between blocks of images in a video sequence and a corresponding motion estimator.

Motion estimation is employed in an increasing number of applications, in particular, in digital signal processing of modern television receivers. Specifically, modern television receivers perform a frame-rate conversion, especially in form of an up-conversion or motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz etc. While a 50 Hz input signal frequency mainly apply to television signals broadcast based on PAL or SECAM standard, NTSC based video signals have an input frequency of 60 Hz. A 60 Hz input video signal may be up-converted to higher frequencies like 72 Hz, 80 Hz, 90 Hz, 120 Hz etc.

During up-conversion, intermediate images are to be generated which reflect the video content at positions in time which are not represented by the 50 Hz or 60 Hz input video sequence. For this purpose, the motion of moving objects has to be taken into account in order to appropriately reflect the changes between subsequent images caused by the motion of objects. The motion of objects is calculated on a block basis, and motion compensation is performed based on the relative position in time of the newly generated image between the previous and subsequent images.

For motion vector determination, each image is divided into a plurality of blocks. Each block is subjected to motion estimation in order to detect a shift of an object from the previous image. A time consuming full search algorithm for detecting a best match block in the previous image within a predefined search range is preferably avoided by employing a plurality of predefined candidate vectors. The set of candidate vectors includes a number of predefined most likely motion vectors.

A motion vector is selected from the candidate vectors based on an error value calculated for each of the candidate vectors. This error function assesses the degree of conformity between the current block and the candidate block in the previous image selected in accordance with the respective candidate vector. The best matching vector having the smallest error function is selected as the motion vector of the current block. As a measure for the degree of similarity between the current and the previous block, the Sum of Absolute Differences (SAD) may be employed.

The set of predefined candidate vectors may include those motion vectors as candidate vectors which have already been determined for adjacent blocks of the current image, motion vectors which have been determined for blocks in the previous image at a similar position, etc.

The article "An Efficient True-Motion Estimator Using Candidate Vectors from a Parametric Motion Model" from Gerard de Haan et al. in IEEE Transactions on Circuits and Systems for Video Technology, vol. 8, no.1, February 1998, describes the calculation of a global motion vector as a candidate vector. The global motion vector reflects a common motion of all blocks of the image.

EP-A-0 578 290 describes further candidate vectors which are based on the motion vectors of adjacent blocks of the current image. The length and direction of these vectors is modified by adding an update vector having a random magnitude. The selection of this type of vectors as motion vector of the current block can be controlled by adding predefined penalty values to the respective SAD. In accordance with the added penalty, the likelihood to be selected as the motion vector of the current block can be respectively reduced.

In addition to image interpolation, motion estimation is further employed during the encoding of video images in order to exploit temporal redundancies. For this purpose, a plurality of video encoding standards has been developed. In wide-spread use are the encoding standards denoted as H.26x or MPEG-x.

Motion estimation employing temporal prediction for motion vector determination can only properly predict the motion of a current block if the referenced block in the previous image belongs to the same moving object of the current block. If the block in a previous image, which is referenced for obtaining a motion vector, does not belong to the same moving object, the previous motion vector does not reflect to object's motion and can consequently not serve as motion vector for the current block. In particular, border areas of moving objects suffer from poor prediction quality as the referenced blocks in the previous image are more likely to not belong to the same image object.

This deficiency in motion vector determination based on temporal prediction is even more serious for video sequences which stem from motion picture. In accordance with the motion picture-to-video conversion scheme, identical images are frequently repeated within the video sequence in accordance with a predefined pull-down pattern. Due to the lower number of motion phases represented by motion pictures, the shift of a moving object between images representing different motion phases is even larger. The larger shift of moving objects between the images complicates temporal prediction and introduces visible artifacts into motion compensated images, in particular, to the contours of fast moving objects.

The present invention aims to overcome these prior art drawbacks and to provide an improved method for determining a motion vector and an improved motion estimator.

This is achieved by the features of independent claims.

According to a first aspect of the present invention, a method for determining a motion vector for a block of current image in a sequence of video images is provided. Each video image is divided into a plurality of blocks. The method determines a motion vector for a current block based on a motion vector estimated for a block of a previous image. The block of the previous image is at a position which has a predefined offset to the position of the current block. The size of the offset is set depending on whether or not the image data stems from a motion picture type image.

According to another aspect of the present invention, a motion estimator for determining a motion vector for a block of a current image in a sequence of video images is provided. Each video image is divided into a plurality of blocks. The motion estimator determines the motion vector for a current block based on a motion vector estimated for a block of a previous image. The block of the previous image is at a position which has a predefined offset to the position of the current block. A film mode detector included in the motion estimator determines whether or not the image data of the current block stem from a motion picture type image. An offset adjusting unit of the motion estimator sets the size of the offset depending on the detection result of the film mode detector.

It is the particular approach of the present invention to adjust the offset when selecting a temporal prediction vector for motion vector determination by taking the type of image data into account. If it turns out that the image data for which a motion vector is to be determined stems from a motion picture, larger shifts of the object borders between subsequent images of different motion phases are to be expected. Consequently, the spatial offset during temporal prediction is increased. In this manner, the temporal prediction of motion vectors takes the characteristics of particular image types into account in order to improve the motion estimation quality and to reduce artifacts visible in motion compensated images.

Preferably, motion picture data determination is performed based on a detected conversion pattern present in the video sequence. The conversion pattern reflects the employed pull-down scheme employed during conversion from motion picture to video data.

According to a preferred embodiment, the image type is determined on an image basis, either per field or per frame. In this manner, a reliable prediction only requiring a low computational effort is enabled.

According to an alternative preferred embodiment, the image type, in particular film mode, is determined based on a block basis. Accordingly, a more accurate determination of the present image type is possible and the present invention can be advantageously applied to mixed type image sequences. Such mixed type image sequences comprise image data stemming from different sources like motion picture and video camera data.

Preferably, the offset value is set twice as large for motion picture type image data compared to standard video image data. Accordingly, the motion can accurately be determined even if different motion phases are only present in every second image of the image sequence. The offset values for standard type images are preferably set between 1 and 4 block lengths while the offset values for motion picture type images are set between 2 and 8 block lengths. Most preferably, the offset value for a standard type images is set to 2 block lengths and the offset value for motion type picture image is set to 4 block lengths.

Preferably, the offset is set differently in horizontal and vertical direction. In this manner, different motion directions can be properly taken into account.

Most preferably, the offset value is set to zero for either the horizontal or the vertical direction. Accordingly, the spatial offset for temporal prediction is either set horizontally or vertically.

According to a preferred embodiment, the motion estimation is performed based on a plurality of candidate vectors. The plurality of candidate vectors include the motion vector of a block in a previous image at a position offset from the position of the current block for determining a best match motion vector. Based on a limited set of candidate motion vectors, each of which proving an individual motion estimation for the current block, a motion vector determination can be performed with reliable results only employing a minimum hardware effort and a minimum number of required computation.

In order to reliably detect a possible motion, different temporal predictions are provided. In particular, the temporal predictions relate to the same previous image, but have different offset values, preferably, either a vertical or horizontal offset.

In contrast to a full search approach for determining a motion vector, a motion estimation is preferably based on candidate vectors including at least one from a zero motion vector pointing to the identical block position of the current block, a motion vector which is determined for an adjacent block of the current image wherein the length of the vector is varied by an update vector and a motion vector from a previous image wherein its position has been shifted in accordance with an offset value. Such a limited set of motion vectors enables a fast and reliable motion vector determination.

Preferred embodiments of the present invention are the subject matter of dependent claims.

Other embodiments and advantages of the present invention will become more apparent in the following description of preferred embodiments, in which:

Fig. 1    illustrates a division of a video image into a plurality of blocks of a uniform size for motion estimation and compensation purposes,

Fig. 2    illustrates a current block B(x,y) and possible spatial prediction positions,

Fig. 3    illustrates a current block B(x,y) and possible spatial and temporal prediction positions,

Fig. 4    illustrates a configuration of an image rate converter,

Fig. 5    illustrates a moving object and temporal prediction positions for motion vector estimation based on small offset values marked in the block raster,

Fig. 6    illustrates a moving object and temporal prediction positions for motion vector estimation based on larger offset values marked in the block raster,

Fig. 7    illustrates different motion phases in a video sequence stemming from a video camera,

Fig. 8    illustrates different motion phases of the same moving object of Fig. 7 in a motion picture sequence,

Fig. 9    illustrates different motion phases in a video sequence stemming from the motion picture sequence illustrated in Fig. 8 which has been converted in to a video sequence, and

Fig. 10    illustrates a configuration of a video encoder including a motion estimator in accordance with the present invention.

The present invention relates to digital signal processing, especially to signal processing in modern television receivers. Modern television receivers employ up-conversion algorithms in order to increase the reproduced picture quality. For this purpose, intermediate images are to be generated from two subsequent images. For generating an intermediate image, the motion of moving objects has to be taken into account in order to appropriately adapt the object position to the point of time reflected by the interpolated image.

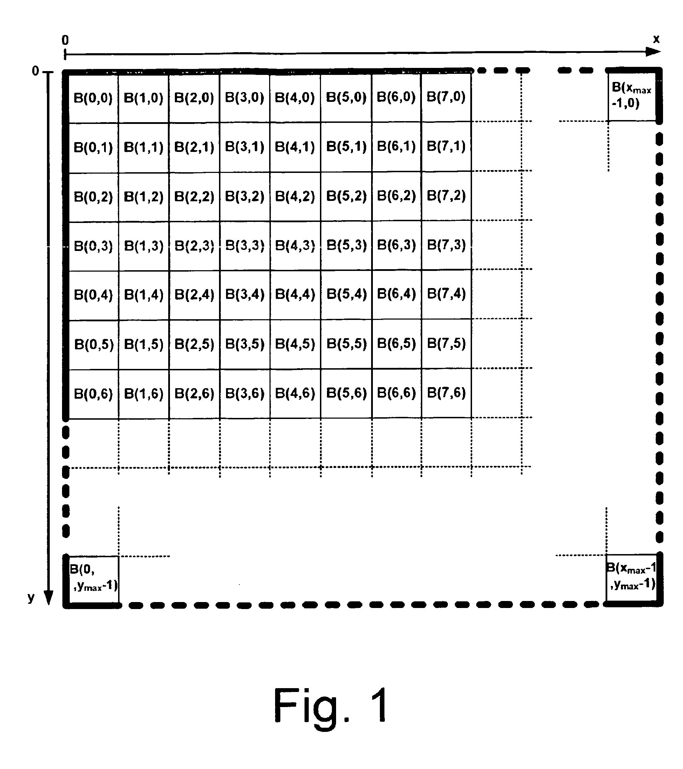

Motion estimation is performed on a block basis. For this purpose, each received image is divided into a plurality of blocks as illustrates, for example, in Fig. 1. Each current block is individually subjected to motion estimation by determining a best matching block in the previous image.

In order to avoid a time consuming full search within a predefined search area, only a limited set of candidate vectors is provided to the motion estimator. From these candidate vectors, the motion estimator selects that vector which can predict the current block from the respective block of the previous image with a minimum amount of deviation.

Fig. 1 illustrates the division of each video image into a plurality of blocks B(x,y). Each block has a width X and a height Y wherein X and Y represent the number of pixels in the line and column direction, respectively. The number of blocks per line or column can be calculated by employing the following formulas:

$$x_{max} = \text{Pixels per line} \,/\, X$$

$$y_{max} = \text{Pixels per column} \,/\, Y$$

For each of these blocks, a motion vector is calculated from a plurality of different candidate vectors. Conventionally, the set of candidate vectors includes for instance the following motion vectors:

$$C_i = (0;0)$$

$$C_2 = \vec{v}[(x-1;y),n]$$

$$C_3 = \vec{v}[(x;y-1),n]$$

$$C_4 = \vec{v}[(x-1;y),n] + \vec{u}$$

$$C_5 = \vec{v}[(x;y-1),n] + \vec{u}$$

$$C_6 = \vec{v}[(x+2;y),n-1]$$

$$C_7 = \vec{v}[(x;y+2),n-1]$$

wherein $n$ indicates the current field, $n-1$ indicates the previous field, and $\vec{u}$ represents the update vector.

As can be seen from the above equations, the candidate vectors may include a zero motion vector ($C_1$), motion vectors of adjacent blocks for a spatial prediction ($C_2$, $C_3$), and/or motion vectors of the previous image for a temporal prediction ($C_6$, $C_7$).

The spatial prediction can be improved by employing update vectors which are accumulated to the spatial prediction vectors $C_2$, $C_3$. In order to take small changes of the object motion compared to a selected candidate vector into account, an update vector is applied to a motion vector to create new candidate vectors $C_4$, $C_5$. Although in the above list of candidate vectors, the update vector $\vec{u}$ is only applied to candidate vectors $C_2$ and $C_3$, it may be applied in the same manner to any other candidate vector, for instance to candidate vectors $C_6$, $C_7$.

Although the temporal prediction vectors $C_6$ and $C_7$ of the above list define the use of candidate vectors having an offset of two blocks, any other offset may be employed instead of two, for instance zero, one, three, etc.

While the temporal prediction vectors have been described with respect to a current and previous image, the term "image" may either relate to fields of an interlaced video sequence or to frames of a progressive video sequence. Correspondingly, the generated intermediate images may be fields or frames depending on the type of video sequence.

Further, the above list of candidate vectors is neither complete nor requires the inclusion of all of the above mentioned candidate vectors. Any other set of candidate vectors may be employed yielding the determination of a best match motion vector for the current block.

For each candidate vector, a prediction error is calculated and evaluated in order to determine the best match motion vector. As a measure for the prediction error, the Sum of Absolute Differences (SAD) can be determined. That candidate vector is selected and is considered to represent best the motion of the block which has the smallest SAD.

As some of the motion vector candidates $C_1$ to $C_7$ may be preferred over other candidate vectors, a programmable "penalty" may be added to the determined SAD for individual candidates. In this manner, the selection of particular candidates can be prioritized. Preferably, the penalty value is proportional to the length of the update vector $\vec{u}$ for motion vector candidates $C_4$, $C_5$.

In addition to the above list of candidate vectors, a global motion vector may be further taken into account. A global motion vector represents motion applicable to all blocks of the video image. Such motion vectors appropriately apply to a camera pan.

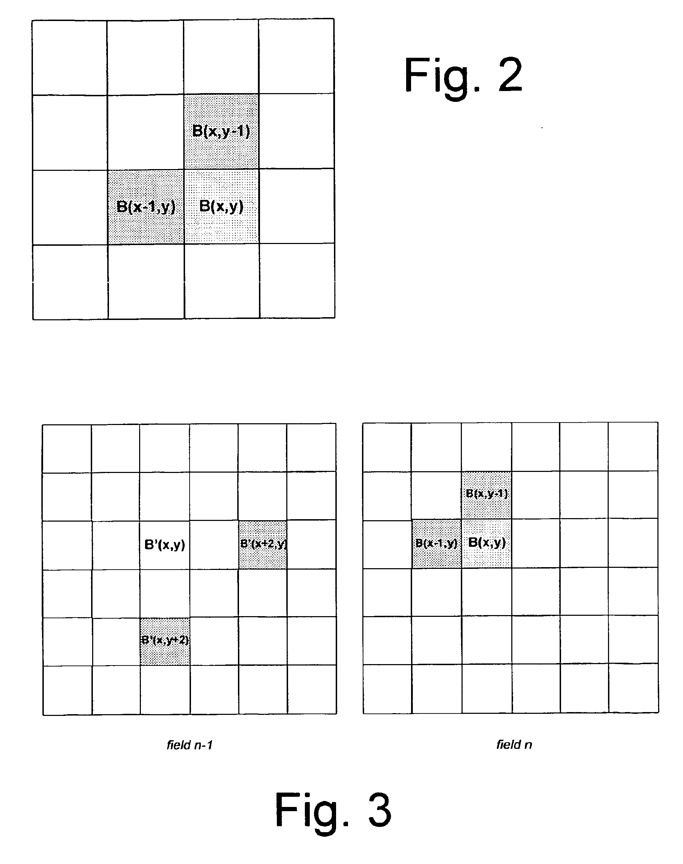

The above listed candidate vectors $C_1$ to $C_7$ include previously calculated motion vectors from the spatial neighborhood as illustrated in Fig. 2. These candidate vectors include already processed blocks B(x-1,y) and B(x,y-1) from adjacent positions to the position of the current block B(x,y) as candidate vectors $C_2$ and $C_3$.

Candidate vectors $C_6$ and $C_7$ represent temporal prediction vectors representing already calculated motion vectors of the previous field n-1. An example for temporal motion prediction vectors is illustrated in Fig. 3 wherein blocks B'(x+2,y) and B'(x,y+2) are marked as prediction vectors.

The temporal prediction vectors provide a homogenous speed of a moving object if the motion of a scene is nearly constant over a number of fields. Based on the vector information generated by the motion estimation algorithm, an intermediate field is interpolated using motion compensation techniques.

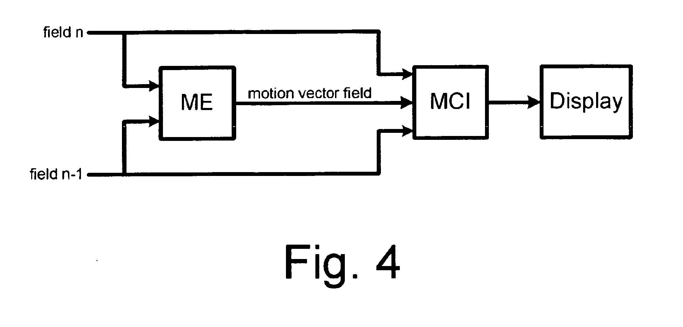

An example configuration of a known field rate converter is illustrated in Fig. 4. Motion estimation circuit ME calculates a motion vector field and supplies the motion vector field to motion compensated interpolation circuit MCI. The motion compensated output image is displayed on a connected display device.

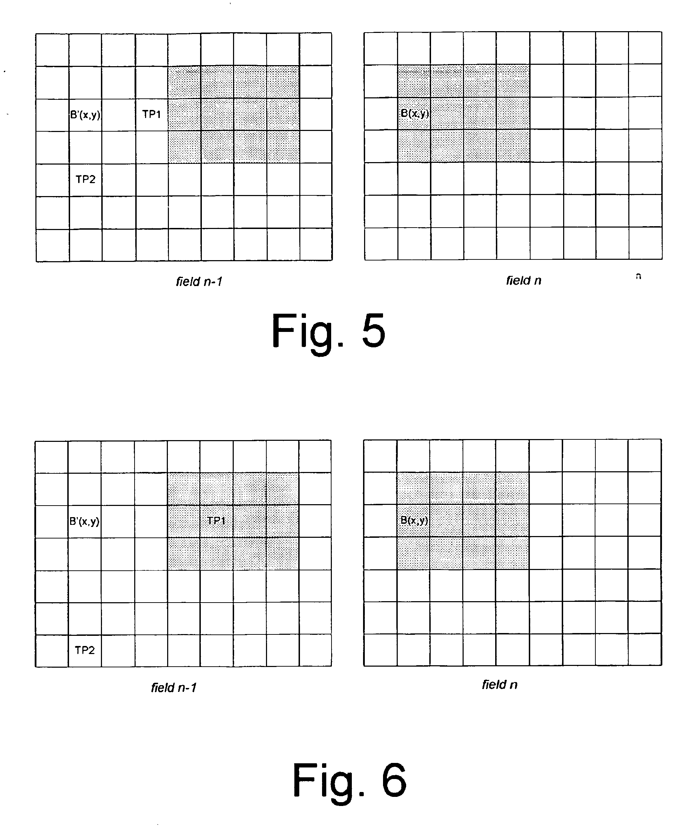

Up-conversion algorithms which are used in high end television receivers suffer from poor image quality if the source material is originating from motion pictures. In case of fast motion, border lines of moving objects cannot be reconstructed during interpolation. This drawback results from temporal prediction block positions in the previous field which are in proximity of the current block. Such temporal prediction positions are outside of the current moving object in the previous field. This problem is illustrated in detail in Fig. 5.

Fig. 5 depicts a grey colored moving object in the current field *n* and in the previous field *n-1*. The grey marked blocks represent an object moving with high speed to the left side. The current block B(x,y) is located at the left border of the moving object. The correspondingly employed temporal prediction vector positions TP1 and TP2 in the previous field *n-1* are located outside of the moving object. Consequently, the temporal prediction vectors TP1 and TP2 cannot provide a motion vector reflecting the motion of the current object.

The motion phases in fields *n* and *n-1* illustrated in Fig. 5 stem from video data converted from motion pictures. Due to a frame rate of 24 Hz of motion pictures, the object positions differ largely between adjacent images compared to video data stemming from camera source material having a field rate of 50 Hz or 60 Hz. Hence, a temporal prediction vector determined in identical manner, but from a camera source material would be able to determine a motion vector reflecting the correct motion of the current image object from the same temporal prediction positions TP1 and TP2 in the previous field.

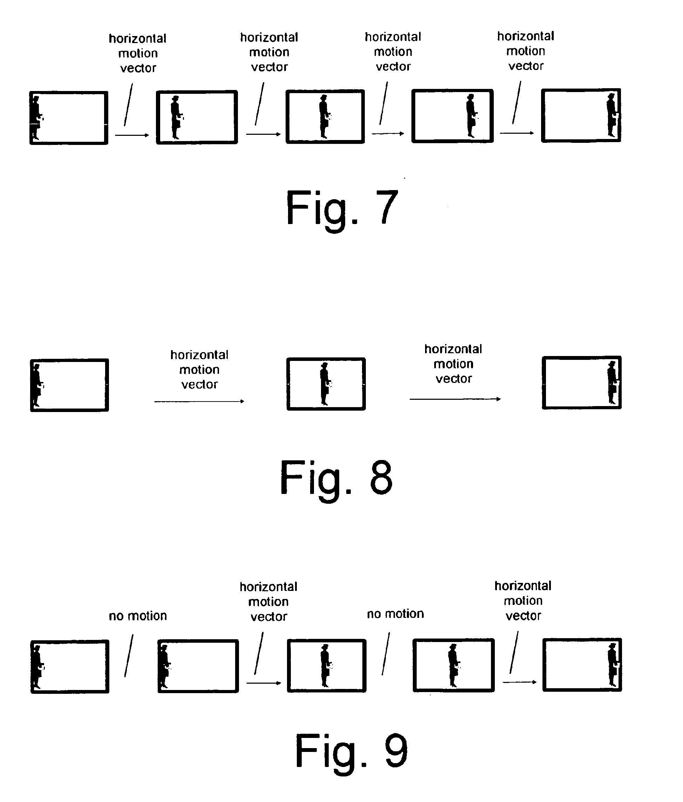

The different motion phases recorded by either a camera or a film camera being converted from film camera motion picture data to video camera data are illustrated in Figs. 7, 8 and 9.

Fig 7 illustrates the motion phases recorded by an electronic camera having an interlaced recording format of a 50 Hz or 60 Hz field rate. In contrast, the same scene recorded by a film camera is illustrated in Fig. 8. Accordingly, motion picture data only reflect less motion phases compared to video data in accordance with television standards like PAL, SECAM or NTSC .

When converting motion picture data as illustrated in Fig. 8 to a television standard like video format, the motion phases from the motion pictures are repeatedly converted into a plurality of fields. As can be seen from Fig. 9, each motion phase from the motion pictures is transformed into two fields of a sequence of fields in accordance with a two-two pull down conversion.

When comparing the object positions of the different motion phases represented in the video sequences of Fig. 7 and Fig. 9, a temporal prediction based on the motion phases of Fig. 9 is rather errorprone. As only fewer images of the video sequence in Fig. 9 reflect different motion phases, a temporal motion vector prediction has to cope with large shifts of the moving object between the motion phases.

Motion estimation applied to video sequences cannot accurately take both kinds of image data into account, i.e. video mode data and film mode data. Consequently, the temporal motion vector prediction generally fails for fast moving objects stemming from a motion picture. Thus, strong artifacts are visible in a motion compensated sequence of field for fast moving objects, in particular at the border lines of the moving objects.

The present invention solves this problem by adapting the offset of temporal prediction vectors depending on the type of image data. In video mode, the block positions in the previous field are set closer to the current block position, while in film mode the temporal prediction positions are set more far away from the current block position. These different prediction modes for video mode and film mode are illustrated in Figs. 5 and 6. While Fig. 5 illustrates offset values of two blocks in horizontal (TP1) and vertical (TP2) directions, Fig. 6 illustrates to set the prediction offsets larger. The horizontal and vertical offsets are set to four blocks.

Generally, the temporal prediction vectors as candidate vectors are set as follows:

- 

$$C_6 = \vec{v}\big[(x + tpx1;\, y + tpy1), n - 1\big]$$

•

$$C_7 = \vec{v}\big[(x + tpx2; y + tpy2), n - 1\big]$$

The variables ($tpx1$, $tpy1$), ($tpx2$, $tpy2$) represent the temporal prediction offset positions. The temporal prediction offset positions depend on the detected source mode for the current image or block. For film mode, the values of the temporal prediction offset positions ($tpx1$, $tpy1$), ($tpx2$, $tpy2$) have to be set larger than for video mode. The film mode or video mode detection can be performed on a block basis, on an image basis, or even based on a sequence of images.

In a preferred embodiment, the temporal prediction offset positions are determined on a block basis in accordance with equations (1) to (4):

$$tpx1 = \begin{array}{l} 2, if\,(block\_mode = 0) \\ 4, else \end{array} \qquad (1)$$

$$tpy1 = 0 \qquad (2)$$

$$tpx2 = 0 \qquad (3)$$

$$tpy2 = \begin{array}{l} 2, if\,(block\_mode = 0) \\ 4, else \end{array} \qquad (4)$$

The parameter $block\_$mode = 0 indicates video mode detected for the current block.

To enhance the motion estimation quality of the larger objects, that move with a nearly constant speed, the candidate vectors $C_6$ and $C_7$ (temporal prediction vectors) are included into the set of candidate vectors. In case of object motion which is almost identical to the object motion in the previous field, the temporal prediction candidate vector perfectly reflects the motion of the current object. Consequently, the calculated error value, preferably the Sum of Absolute Differences (SAD), has the smallest value such that the temporal prediction vectors $C_6$ or $C_7$ will be selected as the best motion vector for the current block.

While the present invention has been previously mainly described in the context of interpolation of intermediate images, in particular, for frame-rate conversion in modern television receivers, the improved motion estimation of the present invention may be applied in a corresponding manner to video data compression.

The compression of video data generally employs a number of main stages. Each individual image is divided into blocks of pixels in order to subject each image to a data compression at a block level. Such a block division may correspond to the division shown in Fig. 1. Spatial redundancies within an image are reduced by applying each block to a transform unit in order to transform the pixels of each block from the spatial domain into the frequency domain. The resulting transform coefficients are quantized, and the quantized transform coefficients are subjected to entropy coding.

Further, temporal dependencies between blocks of subsequent images are exploited in order to only transmit differences between subsequent images. This is accomplished by employing a motion estimation/compensation technique. The exploiting of temporal dependencies is performed by so-called hybrid coding techniques which combine temporal and spatial compression techniques together with statistical coding.

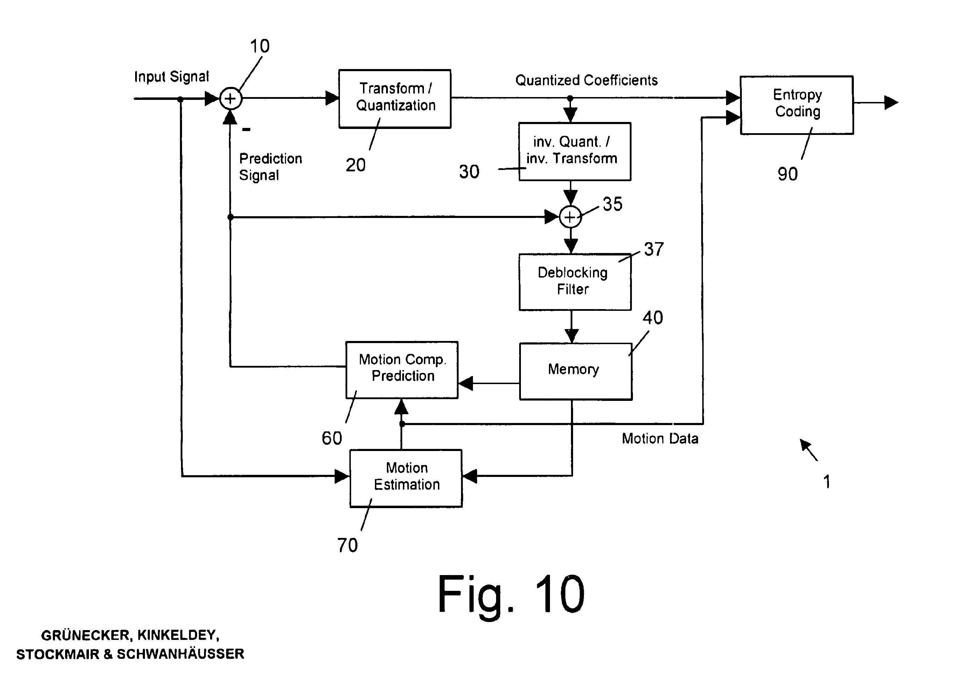

Referring to Fig. 10, an example of a hybrid video encoder is illustrated. The video encoder, generally denoted by reference number 1, comprises a subtractor 10 for determining differences between a current video image and a prediction signal of the current image which is based on a motion compensated previously encoded image. A transform and quantization unit 20 transforms the prediction error from the spatial domain into the frequency domain and quantizes the obtained transformed coefficients. An entropy encoding unit 90 entropy encodes the quantized transform coefficients.

Encoder 1 employs a Differential Pulse Code Modulation (DPCM) which only transmits differences between subsequent images of an input video sequence. These differences are determined by subtractor 10 which receives the video images to be encoded and a prediction signal to be subtracted therefrom.

The prediction signal is based on the decoding result of previously encoded images on the encoder site. This is accomplished by a decoding unit incorporated into the video encoder. The decoding unit performs the encoding steps in reverse manner. Inverse quantization and inverse transform unit 30 dequantizes the quantized coefficients and applies an inverse transform to the dequantized coefficients. Adder 35 accumulates the decoded differences and the prediction signal.

The prediction signal results from an estimation of motion between current and previous fields or frames. The motion estimation is performed by a motion estimator 70 receiving the current input signal and the locally decoded images. Motion estimation is preferably performed in accordance with the present invention. Based on the results of motion estimation, motion compensation is performed by motion compensator 60.

Summarizing, the present invention provides an improved method for motion estimation and in particular for a motion compensated interpolation. By taking the source of the video data into account, a spatial offset for selection of a temporal prediction vector is set in accordance with the detected source mode. By selecting an appropriate offset from the current block position in a previous field, the accuracy of the predicted motion and, consequently, the picture quality of motion compensated interpolated images can be increased considerably.

**Claims**

1. A method for determining a motion vector for a block of a current image in a sequence of video images, each video image being divided into a plurality of blocks, the method determining a motion vector for a current block based on a motion vector estimated for a block of a previous image wherein said block of said previous image being at a position having a predefined offset to the position of said current block

   **characterized by** the step of

   setting the size of said offset depending on whether or not the image data of said current block stem from a motion picture type image.

2. A method according to claim 1, wherein a determination that image data stem from a motion picture type image is based on the detection of a motion picture to video data conversion pattern in the sequence of video images.

3. A method according to claim 2, wherein said conversion pattern being a 2:2 or 3:2 conversion pattern.

4. A method according to any of claims 1 to 3, wherein a determination that image data stem from a motion picture type image is determined on an image basis, in particular per field or frame.

5. A method according to any of claims 1 to 3, wherein a determination that image data stem from a motion picture type image is determined on a block basis.

6. A method according to any of claims 1 to 5, wherein said offset is set larger if said image data stem from motion picture.

7. A method according to claim 6, wherein said offset being set essentially twice as large as an offset value for no motion picture type image data in case of motion picture image data.

8. A method according to claim 6 or 7, wherein said offset being set to values between 1 and 4 block lengths in case of no motion picture type image data, and set to values between 2 and 8 block lengths in case of motion picture based image data.

9. A method according to any of claims 6 to 8, wherein said offset is set to a value of 2 block lengths in case of no motion picture type image data, and set to a value of 4 block lengths in case of motion picture based image data.

10. A method according to any of claims 1 to 9, wherein said offset being set differently in horizontal and vertical direction.

11. A method according to claim 10, wherein said offset being set to zero for either the horizontal or the vertical direction.

12. A method according to any of claims 1 to 11, further comprising the steps of:

selecting a motion vector for said current block from a plurality of candidate motion vectors ($C_1$-$C_7$) including said motion vector estimated for a block of a previous image at a position offset from the position of the current block, and
assigning said selected motion vector to said current block.

13. A method according to claim 12, wherein said selecting step comprising the steps of:

calculating an error value for each of the candidate motion vectors (C1-C7), and
selecting that motion vector having the smallest error value.

14. A method according to claim 12 or 13, wherein said candidate vectors ($C_1$-$C_7$) further include at least one of the following motion vectors:

a zero motion vector ($C_1$) pointing to the identical block position of the current block,
a motion vector ($C_2$, $C_3$) determined for an adjacent block in the current image, and
a motion vector ($C_4$, $C_5$) determined for an adjacent block in the current image wherein the vector length has been varied by adding an update vector (u).

15. A method for encoding a sequence of video images including motion compensation employing a motion estimation method in accordance with any of claims 1 to 14.

16. A method for interpolating a sequence of video images including motion compensation employing a motion estimation method in accordance with any of claims 1 to 14.

17. A method for converting a field- or frame-rate of a video sequence by employing motion compensation in accordance with claim 16.

18. A motion estimator for determining a motion vector for a block of a current image in a sequence of video images, each video image being divided into a plurality of blocks, said motion estimator determining said motion vector for a current block based on a motion vector estimated for a block of a previous image wherein said block of said previous image being at a position having a predefined offset to the position of said current block
**characterized by**
a film mode detector determining whether or not the image data of said current block stem from a motion picture type image, and
an offset adjusting unit for setting the size of said offset depending on the detection result of said film mode detector.

19. A motion estimator according to claim 18, wherein said film mode detector is adapted to determine that image data stem from a motion picture type image based on the detection of a motion picture to video data conversion pattern in the sequence of video images.

20. A motion estimator according to claim 19, wherein said conversion pattern is a 2:2 or 3:2 conversion pattern.

21. A motion estimator according to any of claims 18 to 20, wherein said film mode detector is adapted for determining that image data stem from a motion picture type image on an image basis, in particular per field or frame.

22. A motion estimator according to any of claims 18 to 20, wherein said film mode detector is adapted for determining that image data stem from a motion picture type image on a block basis.

23. A motion estimator according to any of claims 18 to 22, wherein said offset adjusting unit is adapted for setting said offset larger if said image data stem from motion picture.

24. A motion estimator according to claim 23, wherein said offset adjusting unit is adapted for setting said offset to twice the size of an offset value for no motion picture type image data in case of motion picture image data.

25. A motion estimator according to claim 23 or 24, wherein said offset adjusting unit is adapted for setting said offset to values between 1 and 4 block lengths in case of no motion picture type image data, and to values between 2 and 8 block lengths in case of motion picture based image data.

26. A motion estimator according to any of claims 23 to 25, wherein said offset adjusting unit is adapted for setting said offset to a value of 2 block lengths in case of no motion picture type image data, and to a value of 4 block lengths in case of motion picture based image data.

27. A motion estimator according to any of claims 18 to 26, wherein said offset adjusting unit is adapted for setting said offset differently in horizontal and vertical direction.

28. A motion estimator according to claim 27, wherein said offset adjusting unit is adapted for setting said offset being to zero for either the horizontal or the vertical direction.

29. A motion estimator according to any of claims 18 to 28, further comprising a selector for selecting a motion vector for said current block from a plurality of candidate motion vectors ($C_1$-$C_7$) including said motion vector estimated for a block of a previous image at a position offset from the position of the current block, and assigning said selected motion vector to said current block.

30. A motion estimator according to claim 29, wherein said selector comprising:

   a processing unit for calculating an error value for each of the candidate motion vectors (C1-C7), and
   a comparator for selecting that motion vector having the smallest error value.

31. A motion estimator according to claim 29 or 30, wherein said candidate vectors ($C_1$-$C_7$) further include at least one of the following motion vectors:

   a zero motion vector ($C_1$) pointing to the identical block position of the current block,
   a motion vector ($C_2$, $C_3$) determined for an adjacent block in the current image, and
   a motion vector ($C_4$, $C_5$) determined for an adjacent block in the current image wherein the vector length has been varied by adding an update vector (u).

32. An video encoder for encoding a sequence of video images, said video encoder including a motion compensator employing a motion estimator in accordance with any of claims 18 to 31.

33. An interpolator for interpolating a sequence of video images, said interpolator including a motion compensator employing a motion estimator in accordance with any of claims 18 to 31.

**Patentansprüche**

1. Verfahren zur Bestimmung eines Bewegungsvektors für einen Block eines aktuellen Bildes in einer Sequenz von Videobildern, wobei jedes Videobild in eine Mehrzahl von Blöcke unterteilt ist, das Verfahren bestimmt einen Bewegungsvektor eines aktuellen Blockes basierend auf einem Bewegungsvektor, der für einen Block eines vorhergehenden Bildes geschätzt wurde, wobei sich der Block des vorhergehenden Bildes an einer Position mit einem vordefinierten Versatz zu der Position des aktuellen Blocks befindet,
   **gekennzeichnet durch** den Schritt
   Einstellen der Größe des Versatzes in Abhängigkeit davon, ob die Bilddaten des aktuellen Blocks von einem Bild eines Bewegtbildtyps stammen.

2. Verfahren nach Anspruch 1, wobei eine Bestimmung, dass Bilddaten von einem Bildtyp eines Bewegtbilds stammen, auf der Detektion eines Umwandlungsmusters eines Bewegtbilds in Videodaten in der Videobildsequenz basieren.

3. Verfahren nach Anspruch 2, wobei das Umwandlungsmuster ein 2:2 oder 3:2 Umwandlungsmuster ist.

4. Verfahren nach einem der Ansprüche 1 bis 3, wobei eine Bestimmung, dass Bilddaten von einem Bild eines Bewegtbildstyp stammen, auf Basis eines Bildes bestimmt wird, im besonderen pro Halbbild oder Vollbild.

5. Verfahren nach einem der Ansprüche 1 bis 3, wobei eine Bestimmung, dass Bilddaten von einem Bild eines Bewegtbildtyps stammen, auf Blockbasis bestimmt wird.

**6.** Verfahren nach einem der Ansprüche 1 bis 5, wobei der Versatz größer eingestellt wird, wenn die Bilddaten von einem Bewegtbild stammen.

**7.** Verfahren nach Anspruch 6, wobei im Fall von Bilddaten von Bewegtbilder der Versatz notwendigerweise zweimal so groß eingestellt wird, wie ein Versatz für Bilddaten eines Nicht-Bewegtbildtyps,

**8.** Verfahren nach Anspruch 6 oder 7, wobei der Versatz im Falle von Bilddaten eines Nicht-Bewegtbildtyps auf Werte zwischen 1 und 4 Blocklängen eingestellt wird, und im Falle von Bilddaten die auf Bewegtbilder basieren auf Werte zwischen 2 und 8 Blocklängen eingestellt wird.

**9.** Verfahren nach einem der Ansprüche 6 bis 8, wobei der Versatz im Falle von Bilddaten eines Nicht-Bewegtbildtyps auf einen Wert von 2 Blocklängen eingestellt wird, und im Falle von Bilddaten, die auf Bewegtbilder basieren auf einen Wert von 4 Blocklängen eingestellt wird.

**10.** Verfahren nach einem der Ansprüche 1 bis 9, wobei der Versatz in horizontale und vertikale Richtung unterschiedlich eingestellt wird.

**11.** Verfahren nach Anspruch 10, wobei der Versatz entweder in horizontale oder vertikale Richtung auf Null eingestellt wird.

**12.** Verfahren nach einem der Ansprüche 1 bis 11, das weiter die Schritte umfasst:

Auswählen eines Bewegungsvektors für den aktuellen Block aus einer Mehrzahl von Bewegungsvektorkandidaten ($C_1$-$C_7$), die den Bewegungsvektor enthalten, der für einen Block eines vorhergehenden Bildes an einer von der Position des aktuellen Blockes versetzten Positionen geschätzt wurde, und
Zuordnen des ausgewählten Bewegungsvektors zu dem aktuellen Block.

**13.** Verfahren nach Anspruch 12, wobei der Auswahlschritt die Schritte umfasst:

Berechnen eines Fehlerwerts für jeden Bewegungsvektorkandidaten ($C_1$-$C_7$), und
Auswählen des Bewegungsvektors, der den kleinsten Fehlerwert hat.

**14.** Verfahren nach Anspruch 12 oder 13, wobei der Vektorkandidat ($C_1$-$C_7$) mindestens einen der folgenden Vektoren enthält:

einen Null-Bewegungsvektor ($C_1$), der auf die identische Blockposition des aktuellen Blockes zeigt,
einen Bewegungsvektor ($C_2$, $C_3$), der für einen Nachbarblock des aktuellen Bildes bestimmt wird,
einen Bewegungsvektor ($C_4$, $C_5$), der für einen Nachbarblock in dem aktuellen Bild bestimmt wird, wobei die Vektorlänge durch Addition eines Aktualisierungsvektors (u) variiert wird.

**15.** Verfahren zur Kodierung einer Sequenz von Videobildern, das Bewegungskompensation enthält, wobei ein Verfahren zu Bewegungsschätzung gemäß einem der Ansprüche aus 1 bis 14 angewendet wird.

**16.** Verfahren zur Interpolation einer Sequenz von Videobilder das Bewegungskompensation enthält, wobei ein Verfahren zu Bewegungsschätzung gemäß einem der Ansprüche aus 1 bis 14 angewendet wird.

**17.** Verfahren zur Umwandlung einer Halbbild- oder Vollbild-Rate einer Videosequenz durch die Anwendung von Bewegungskompensation gemäß Anspruch 16.

**18.** Bewegungsschätzer zur Bestimmung eines Bewegungsvektor für einen Block eines aktuellen Bildes in einer Sequenz von Videobildern, wobei jedes Videobild in eine Mehrzahl von Blöcke unterteilt ist, der Bewegungsschätzer bestimmt den Bewegungsvektor für einen aktuellen Block basierend auf einem Bewegungsvektor, der für einen Block eines vorhergehenden Bildes bestimmt wurde, wobei sich der Block des vorhergehenden Bildes an einer Position mit einem vordefinierten Versatz zu der Position des aktuellen Blocks befindet,
**gekennzeichnet durch**
einen Filmmodusdetektor, der bestimmt, ob die Bilddaten des aktuellen Blockes von einem Bild eines Bewegtbildtyps stammen und
eine Versatzanpassungseinheit zum Einstellen der Größe des Versatzes abhängig von dem Detektionsergebnis des Filmmodusdetektors.

19. Bewegungsschätzer nach Anspruch 18, wobei der Filmmodusdetektor so angepasst ist, dass er basierend auf der Detektion eines Umwandlungsmusters eines Bewegtbilds in Videodaten in einer Sequenz von Videobildern bestimmt, dass Bilddaten von einem Bild eines Bewegtbildtyps stammen.

20. Bewegungsschätzer nach Anspruch 19, wobei das Umwandlungsmuster ein 2:2 oder 3:2 Umwandlungsmuster ist.

21. Bewegungsschätzer nach einem der Ansprüche 18 bis 20, wobei der Filmmodusdetektor so angepasst ist, dass er auf Bildbasis, im besonderen je Halbbild oder Vollbild, bestimmt, dass Bilddaten von einem Bild eines Bewegtbildtyps stammen.

22. Bewegungsschätzer nach einem der Ansprüche 18 bis 20, wobei der Filmmodusdetektor so angepasst ist, dass er auf Blockbasis bestimmt, dass Bilddaten von einem Bild eines Bewegtbildtyps stammen.

23. Bewegungsschätzer nach einem der Ansprüche 18 bis 22, wobei die Versatzanpassungseinheit so angepasst ist, dass sie den Versatz größer eingestellt, wenn die Bilddaten von einem Bewegtbild stammen

24. Bewegungsschätzer nach Anspruch 23, wobei die Versatzanpassungseinheit so angepasst ist, dass im Falle von Bewegtbilddaten den Versatz auf die zweifache Größe des Versatzwertes für Bilddaten für Nicht-Bewegtbildtypen einstellt.

25. Bewegungsschätzer nach Anspruch 23 oder 24, wobei die Versatzanpassungseinheit so angepasst ist, dass sie im Fall von Bilddaten von Nicht-Bewegtbildtypen den Versatz auf Werte zwischen 1 und 4 Blocklängen eingestellt, und im Fall von Bilddaten, die auf Bewegtbildern basieren, einen Wert zwischen 2 und 8 Blocklängen einstellt.

26. Bewegungsschätzer nach einem der Ansprüche 23 bis 25, wobei die Versatzanpassungseinheit so angepasst ist, dass sie im Fall von Bilddaten von Nicht-Bewegtbildtypen den Versatz auf 2 Blocklängen eingestellt, und im Fall von Bilddaten, die auf Bewegtbildern basieren, einen Wert von 4 Blocklängen einstellt.

27. Bewegungsschätzer nach einem der Ansprüche 18 bis 26, wobei die Versatzanpassungseinheit so angepasst ist, dass sie den Versatz in horizontale und vertikale Richtung unterschiedlich einstellt.

28. Bewegungsschätzer nach Anspruch 27, wobei die Versatzanpassungseinheit so angepasst ist, dass der Versatz entweder in horizontale oder vertikalen Richtung Null ist.

29. Bewegungsschätzer nach einem der Ansprüche 18 bis 28, der ferner eine Auswahleinheit enthält, zur Auswahl eines Bewegungsvektors für den aktuellen Block aus einer Mehrzahl von Bewegungsvektorkandidaten ($C_1$-$C_7$), die den Bewegungsvektor enthalten, der für den Block eines vorherigen Bildes an einer Position, die von der Position des aktuellen Blocks versetzt ist, geschätzt wurde, und Zuordnen des ausgewählten Bewegungsvektors zu dem aktuellen Block.

30. Die Bewegungsschätzer nach Anspruch 29, wobei die Auswahleinheit umfasst:

  eine Verarbeitungseinheit zur Berechnung eines Fehlerwert für jeden Bewegungsvektorkandidaten ($C_1$-$C_7$), und eine Vergleichseinheit zur Auswahl des Bewegungsvektors, der den kleinsten Fehlerwert hat.

31. Bewegungsschätzer nach Anspruch 29 oder 30, wobei die Vektorkandidaten ($C_1$-$C_7$) mindestens einen der folgenden Vektoren enthalten:

  einen Null-Bewegungsvektor ($C_1$), der auf die identische Blockposition des aktuellen Blockes zeigt,
  einen Bewegungsvektor ($C_2$, $C_3$), der für einen Nachbarblock des aktuellen Bildes bestimmt wird,
  einen Bewegungsvektor ($C_4$, $C_5$), der für einen Bachbarblock in dem aktuellen Bild bestimmt wird, wobei die Vektorlänge durch Addition eines Aktualisierungsvektors ($u$) variiert wird.

32. Ein Videokodierer zu Kodierung einer Sequenz von Videobilder, wobei der Videokodierer einen Bewegungskompensator enthält, der einen Bewegungsschätzer gemäß einem der Ansprüche 18 bis 31 verwendet.

**33.** Ein Interpolator zur Interpolation einer Sequenz von Videobilder, wobei der Interpolator eine Bewegungskompensator enthält, der einen Bewegungsschätzer gemäß einem der Ansprüche 18 bis 31 verwendet.

**Revendications**

**1.** Procédé de détermination d'un vecteur de mouvement pour un bloc d'une image en cours dans une séquence d'images vidéo, chaque image vidéo étant divisée en une pluralité de blocs le procédé déterminant un vecteur de mouvement pour un bloc en cours sur la base d'un vecteur de mouvement estimé pour un bloc d'une image précédente où ledit bloc de ladite image précédente est à une position présentant un décalage prédéfini par rapport à la position dudit bloc en cours,
**caractérisé par** l'étape consistant à
établir la taille dudit décalage en fonction du fait que les données d'image dudit bloc en cours proviennent ou non d'une image de type vue animée.

**2.** Procédé selon la revendication 1, dans lequel une détermination du fait que les données d'image proviennent d'une image du type vue animée est fondée sur la détection d'une vue animée en une configuration de conversion de données vidéo dans la séquence d'images vidéo.

**3.** Procédé selon la revendication 2, dans lequel ladite configuration de conversion est une configuration de conversion de 2:2 ou 3:2.

**4.** Procédé selon l'une quelconque des revendications 1 à 3 dans lequel une détermination du fait que des données d'image proviennent d'une image du type vue animée est déterminée sur une base d'image, en particulier par champ ou par trame.

**5.** Procédé selon l'une quelconque des revendications 1 à 3, dans lequel une détermination du fait que les données d'image proviennent d'une image du type vue animée est déterminée sur une base par bloc.

**6.** Procédé selon l'une quelconque des revendications 1 à 5, dans lequel ledit décalage est établi à une valeur plus importante si lesdites données d'image proviennent de vue animée.

**7.** Procédé selon la revendication 6, dans lequel ledit décalage est établi à une valeur qui est pratiquement deux fois aussi grande qu'une valeur de décalage pour des données d'image de type vue non animée dans le cas de données d'image de vue animée.

**8.** Procédé selon la revendication 6 ou 7, dans lequel ledit décalage est établi à des valeurs entre 1 et 4 longueurs de bloc dans le cas où il n'y a pas de données d'image du type vue animée, et établi à des valeurs entre 2 et 8 longueurs de bloc dans le cas où il y a des données d'image fondées sur des vues animées.

**9.** Procédé selon l'une quelconque des revendications 6 à 8, dans lequel ledit décalage est établi à une valeur de 2 longueurs de bloc dans le cas où il n'y a pas de données d'image du type vue animée, et établi à une valeur de 4 longueurs de bloc dans le cas de données d'image fondées sur des vues animées.

**10.** Procédé selon l'une quelconque des revendications 1 à 9, dans lequel ledit décalage est établi de manière différente dans les directions horizontale et verticale.

**11.** Procédé selon la revendication 10, dans lequel ledit décalage est établi à zéro soit pour la direction horizontale, soit pour la direction verticale.

**12.** Procédé selon l'une quelconque des revendications 1 à 11, comprenant en outre les étapes consistant à :

sélectionner un vecteur de mouvement pour ledit bloc en cours à partir d'une pluralité de vecteurs de mouvement candidats ($C_1$ à $C_7$) comprenant ledit vecteur de mouvement estimé pour un bloc d'une image précédente à une position décalée par rapport à la position du bloc en cours, et
affecter ledit vecteur de mouvement sélectionné audit bloc en cours.

**13.** Procédé selon la revendication 12, dans lequel ladite étape de sélection comprend les étapes consistant à :

calculer une valeur d'erreur pour chacun des vecteurs de mouvement candidats ($C_1$ à $C_7$), et

sélectionner le vecteur de mouvement ayant la valeur d'erreur la plus petite.

**14.** Procédé selon la revendication 12 ou 13, dans lequel lesdits vecteurs candidats ($C_1$ à $C_7$) comprennent en outre au moins l'un des vecteurs de mouvement suivants :

un vecteur de mouvement nul ($C_1$) pointant sur la position de bloc identique du bloc en cours,
un vecteur de mouvement ($C_2$, $C_3$) déterminé pour un bloc adjacent dans l'image en cours, et
un vecteur de mouvement ($C_4$, $C_5$) déterminé pour un bloc adjacent dans l'image en cours où on a fait varier la longueur du vecteur en ajoutant un vecteur de mise à jour (u).

**15.** Procédé destiné à coder une séquence d'images vidéo comprenant une compensation de mouvement employant un procédé d'estimation de mouvement conformément à l'une quelconque des revendications 1 à 14.

**16.** Procédé d'interpolation d'une séquence d'images vidéo comprenant une compensation de mouvement employant un procédé d'estimation de mouvement conforme à l'une quelconque des revendications 1 à 14.

**17.** Procédé de conversion d'un débit de champ ou d'un débit de trame d'une séquence vidéo en employant une compensation de mouvement selon la revendication 16.

**18.** Estimateur de mouvement destiné à déterminer un vecteur de mouvement pour un bloc d'une image en cours dans une séquence d'images vidéo, chaque image vidéo étant divisée en une pluralité de blocs, ledit estimateur de mouvement déterminant ledit vecteur de mouvement pour un bloc en cours sur la base d'un vecteur de mouvement estimé pour un bloc d'une image précédente, où ledit bloc de ladite image précédente est à une position qui présente un décalage prédéfini par rapport à la position dudit bloc en cours
**caractérisé par**
un détecteur de mode de film déterminant si les données d'image dudit bloc en cours proviennent ou non d'une image de type vue animée, et
une unité de réglage de décalage destinée à établir la taille dudit décalage en fonction du résultat de détection dudit détecteur de mode de film.

**19.** Estimateur de mouvement selon la revendication 18, dans lequel ledit détecteur de mode de film est conçu pour déterminer que les données d'image proviennent d'une image de type vue animée sur la base de la détection d'une vue animée en une configuration de conversion de données vidéo dans la séquence d'images vidéo.

**20.** Estimateur de mouvement selon la revendication 19, dans lequel ladite configuration de conversion est une configuration de conversion 2:2 ou 3:2.

**21.** Estimateur de mouvement selon l'une quelconque des revendications 18 à 20, dans lequel ledit détecteur de mode de film est conçu pour déterminer que les données d'image proviennent d'une image de type vue animée sur une base d'image, en particulier par champ ou par trame.

**22.** Estimateur de mouvement selon l'une quelconque des revendications 18 à 20, dans lequel ledit détecteur de mode de film est conçu pour déterminer que les données d'image proviennent d'une image de type vue animée sur une base de bloc.

**23.** Estimateur de mouvement selon l'une quelconque des revendications 18 à 22, dans lequel ladite unité de réglage de décalage est conçue pour établir ledit décalage à une valeur plus importante si lesdites données d'image proviennent d'une vue animée.

**24.** Estimateur de mouvement selon la revendication 23, dans lequel ladite unité de réglage de décalage est conçue pour établir ledit décalage à deux fois la taille d'une valeur de décalage pour des données d'image du type vue non animée dans le cas de données d'image de vue animée.

**25.** Estimateur de mouvement selon la revendication 23 ou 24, dans lequel ladite unité de réglage de décalage est conçue pour établir ledit décalage à des valeurs entre 1 et 4 longueurs de bloc dans le cas de données d'image du type vue non animée, et à des valeurs entre 2 et 8 longueurs de bloc dans le cas de données d'image fondées sur des vues animées.

**26.** Estimateur de mouvement selon l'une quelconque des revendications 23 à 25, dans lequel ladite unité de réglage de décalage est conçue pour établir ledit décalage à une valeur de 2 longueurs de bloc dans le cas de données d'image du type vue non animée et à une valeur de 4 longueurs de bloc dans le cas de données d'image fondées sur des vues animées.

**27.** Estimateur de mouvement selon l'une quelconque des revendications 18 à 26, dans lequel ladite unité de réglage de décalage est conçue pour établir ledit décalage différemment dans les directions horizontale et verticale.

**28.** Estimateur de mouvement selon la revendication 27, dans lequel ladite unité de réglage de décalage est conçue pour établir ledit décalage à zéro soit pour la direction horizontale, soit pour la direction verticale.

**29.** Estimateur de mouvement selon l'une quelconque des revendications 18 à 28, comprenant en outre un sélecteur destiné à sélectionner un vecteur de mouvement pour ledit bloc en cours à partir d'une pluralité de vecteurs de mouvement candidats ($C_1$ à $C_7$) comprenant ledit vecteur de mouvement estimé pour un bloc d'une image précédente à une position décalée par rapport à la position du bloc en cours, et à affecter ledit vecteur de mouvement sélectionné audit bloc en cours.

**30.** Estimateur de mouvement selon la revendication 29, dans lequel ledit sélecteur comprend :

une unité de traitement destinée à calculer une valeur d'erreur pour chacun des vecteurs de mouvement candidats ($C_1$ à $C_7$), et
un comparateur destiné à sélectionner le vecteur de mouvement qui présente la valeur d'erreur la plus petite.

**31.** Estimateur de mouvement selon la revendication 29 ou 30, dans lequel lesdits vecteurs candidats ($C_1$ à $C_7$) comprennent en outre au moins l'un des vecteurs de mouvement suivants :

un vecteur de mouvement nul ($C_1$) pointant sur la position de bloc identique du bloc en cours,
un vecteur de mouvement ($C_2$, $C_3$) déterminé pour un bloc adjacent dans l'image en cours, et
un vecteur de mouvement ($C_4$, $C_5$) déterminé pour un bloc adjacent dans l'image en cours où on a fait varier la longueur du vecteur en ajoutant un vecteur de mise à jour (u).

**32.** Codeur vidéo destiné à coder une séquence d'images vidéo, ledit codeur vidéo comprenant un compensateur de mouvement employant un estimateur de mouvement conformément à l'une quelconque des revendications 18 à 31.

**33.** Interpolateur destiné à interpoler une séquence d'images vidéo, ledit interpolateur comprenant un compensateur de mouvement employant un estimateur de mouvement conforme à l'une quelconque des revendications 18 à 31.

Fig. 1

Fig. 2

*field n-1*

*field n*

Fig. 3

field n

ME   motion vector field   MCI   Display

field n-1

# Fig. 4

B'(x,y)  TP1

TP2

*field n-1*

B(x,y)

*field n*

# Fig. 5

B'(x,y)  TP1

TP2

*field n-1*

B(x,y)

*field n*

# Fig. 6

horizontal motion vector | horizontal motion vector | horizontal motion vector | horizontal motion vector

# Fig. 7

horizontal motion vector | horizontal motion vector

# Fig. 8

no motion | horizontal motion vector | no motion | horizontal motion vector

# Fig. 9

Fig. 10

GRÜNECKER, KINKELDEY,
STOCKMAIR & SCHWANHÄUSSER